(19) Europäisches Patentamt

European Patent Office

Office européen des brevets

(11) **EP 3 599 127 B1**

(12) **EUROPÄISCHE PATENTSCHRIFT**

(45) Veröffentlichungstag und Bekanntmachung des Hinweises auf die Patenterteilung:
**05.10.2022   Patentblatt 2022/40**

(21) Anmeldenummer: **18185540.4**

(22) Anmeldetag: **25.07.2018**

(51) Internationale Patentklassifikation (IPC):
**B60L 13/03** (2006.01)    **B65G 54/02** (2006.01)
**H02K 41/025** (2006.01)    **H02K 41/03** (2006.01)

(52) Gemeinsame Patentklassifikation (CPC):
**B65G 54/02; B60L 13/03; H02K 41/025;**
**H02K 41/031;** H02K 11/21

(54) **VERFAHREN ZUM BETREIBEN EINES LANGSTATORLINEARMOTORS MIT TRANSPORTEINHEITEN UND KOLLISIONSÜBERWACHUNG**

METHOD FOR OPERATING A LONG-STATOR LINEAR MOTOR WITH TRANSPORT UNITS AND COLLISION MONITORING

PROCÉDÉ DE FONCTIONNEMENT D'UN MOTEUR LINÉAIRE À STATOR LONG POURVU D'UNITÉS DE TRANSPORT ET SURVEILLANCE DE COLLISION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.01.2020   Patentblatt 2020/05**

(73) Patentinhaber: **B&R Industrial Automation GmbH 5142 Eggelsberg (AT)**

(72) Erfinder:
• **Huber, Stefan**
  **5020 Salzburg (AT)**
• **Walter, Dominic**
  **5020 Salzburg (AT)**

• **Reichenwallner, Benjamin**
  **5020 Salzburg (AT)**

(74) Vertreter: **Patentanwälte Pinter & Weiss OG Prinz-Eugen-Straße 70 1040 Wien (AT)**

(56) Entgegenhaltungen:
**EP-A1- 2 639 187     EP-A2- 3 196 719**
**EP-B1- 3 196 719     JP-A- H05 303 423**

Bemerkungen:
Die Akte enthält technische Angaben, die nach dem Eingang der Anmeldung eingereicht wurden und die nicht in dieser Patentschrift enthalten sind.

**Beschreibung**

Die gegenständliche Erfindung betrifft ein Verfahren zum Betreiben einer Fördereinrichtung in Form eines Langstatorlinearmotors mit einer Förderstrecke, entlang der zumindest zwei Transporteinheiten hintereinander bewegt werden, wobei bei der Bewegung der beiden Transporteinheiten geprüft wird, ob ein vorgegebener Mindestabstand zwischen den beiden Transporteinheiten eingehalten wird, um eine Kollision der beiden Transporteinheiten zu vermeiden, wobei der einzuhaltende Mindestabstand in Abhängigkeit von der Position der beiden Transporteinheiten entlang der Förderstrecke verändert wird. Die Erfindung betrifft auch eine entsprechende Fördereinrichtung.

Langstatorlinearmotoren werden oftmals als flexible Fördereinrichtungen in Herstellungs-, Bearbeitungs-, Montageanlagen, und ähnlichen Anlagen, verwendet. Ein Langstatorlinearmotor besteht bekanntermaßen im Wesentlichen aus einem Langstator in Form einer Vielzahl hintereinander angeordneter Antriebsspulen und einer Vielzahl von Transporteinheiten mit Erregungsmagneten (Permanent- oder Elektromagnete), die entlang des Langstators bewegt werden, indem die Antriebsspulen im Bereich einer Transporteinheit entsprechend mit einem elektrischen Strom beaufschlagt werden. Durch die Antriebsspulen wird ein bewegtes Magnetfeld erzeugt, das mit den Erregungsmagneten an den Transporteinheiten zusammenwirkt, um die die Transporteinheiten zu bewegen. Durch den Langstator wird somit eine Förderstrecke ausgebildet, entlang der die Transporteinheiten bewegt werden können. Damit ist es möglich jede Transporteinheit einzeln und unabhängig voneinander in ihrer Bewegung (Position, Geschwindigkeit, Beschleunigung) zu regeln. Dazu kann jede für die Bewegung benötigte Antriebsspule durch einen zugeordneten Antriebsspulenregler angesteuert werden, der Vorgaben zur Bewegung einer Transporteinheit (z.B. in Form von Sollwerten für Position oder Geschwindigkeit) von einer übergeordneten Anlagensteuereinheit erhalten kann. Dabei können entlang der Förderstrecke auch Weichen des Langstatorlinearmotors vorgesehen sein, um eine Transporteinheit auf verschiedenen Transportabschnitten, die durch die Weiche verbunden sind, bewegen zu können. Oftmals ist der Langstator auch in Form von Fördersegmenten aufgebaut, wobei jedes Fördersegment einen Teil der Förderstrecke bildet und eine Anzahl von Antriebsspulen enthält. Meistens ist für ein Fördersegment ein Segmentregler vorgesehen, der alle Antriebsspulen des Fördersegments regelt, beispielsweise mittels untergeordneter Spulenregler pro Antriebsspule. Es können auch nahezu beliebige Förderstrecken ausgebildet sein, beispielsweise mit Geraden, Kurven, geschlossenen Bahnen, usw. Die konstruktive Ausgestaltung des Langstatorlinearmotors, also z.B. die Ausführung der Antriebsspulen, der Förderstrecke, der Transporteinheiten, der Führungen der Transporteinheit, usw., und das Regelungskonzept können natürlich verschieden sein, wobei das grundlegende Funktionsprinzip eines Langstatorlinearmotors aber gleich bleibt.

Eine Fördereinrichtung in Form eines Langstatorlinearmotors kann durchaus komplex werden, auch mit mehreren Transportabschnitten, die durch Weichen miteinander verbunden sein können. Darauf können auch eine hohe Anzahl von Transporteinheiten gleichzeitig bewegt werden. Eine solche Fördereinrichtung stellt damit hohe Anforderungen an die Steuerung der Bewegung der einzelnen Transporteinheiten. Insbesondere müssen in der Regel Vorkehrungen getroffen werden, dass einzelne Transporteinheiten während deren Bewegung nicht miteinander kollidieren.

Die Notwendigkeit einer Kollisionsvermeidung ist auch von anderen Fördereinrichtungen bekannt. Beispielsweise zeigt die JP H05 303423 A eine Fördereinrichtung mit Fahrzeugen, die entlang einer Förderstrecke bewegt werden. Der Abstand zwischen zwei hintereinanderfahrenden Fahrzeugen wird auf einer geraden Strecke mittels Abstandssensoren auf den Fahrzeugen überwacht. In einer Kurve sind Sensoren auf den Fahrzeugen oder an der Strecke vorgesehen, um die Einhaltung eines Mindestabstandes zwischen zwei hintereinanderfahrenden Fahrzeugen sicherzustellen. Ein derartiges Vorgehen erfordert einen hohen Hardwareaufwand an zusätzlichen Sensoren.

Die EP 3 196 719 A2 beschreibt einen Langstatorlinearmotor, bei dem aus mehreren, benachbarte Transporteinheiten einen Cluster bilden und die Transporteinheiten des Clusters gemeinsam bewegt werden. Es ist beschrieben, wie der Abstand zwischen den Transporteinheiten des Clusters verändert werden, um einen "Caterpillar" Effekt zu vermeiden.

Die US 8,863,669 B2 beschreibt beispielsweise eine Fördereinrichtung in Form eines Langstatorlinearmotors mit einer Steuerung der Bewegung der Transporteinheiten. Darin wird die Förderstrecke in Zonen eingeteilt, wobei eine Transporteinheit in einer sollwertbasierten Zone anhand einer Sollwertvorgabe gesteuert wird und in einer grenzwertbasierten Zone mittels Vorgaben für die Endposition und Maximalwerten für die Geschwindigkeit und Beschleunigung gesteuert wird. Bei der grenzwertbasierten Steuerung werden diese Vorgaben in ein Bewegungsprofil umgewandelt, mit dem die Transporteinheit bewegt wird. Die US 8,863,669 B2 erwähnt auch, dass Kollisionen der Transporteinheiten zu vermeiden sind, wobei aber keine Ausführungen gemacht werden, wie das erreicht wird.

Die EP 3 196 719 A2 beschreibt, dass die Länge einer Transporteinheit in Bewegungsrichtung entgegen der Bewegungsrichtung um eine vorgegebene minimale Kollisionsvermeidungsdistanz verlängert werden kann. Eine hinter dieser Transporteinheit fahrende weitere Transporteinheit muss dann zumindest soweit Abstand halten, dass diese durch kontrolliertes Abbremsen vor der um die Kollisionsvermeidungsdistanz verlängerte Länge der Transporteinheit stehen bleiben kann. Die Kollisionsvermeidungsdistanz wird dabei konfiguriert.

In der EP 3 202 612 A1 wird für eine Transporteinheit vorausschauend geprüft, ob ein Stillstandmanöver mit vorgegebener Kinematik durchgeführt werden kann, sodass eine Kollision mit einer davor fahrenden Transporteinheit verhindert werden kann und, falls nicht, das Stillstandmanöver eingeleitet wird. Dabei kann nach dem Ausführen des Stillstandmanövers auch ein erreichter Mindestabstand gefordert sein, in dem auch eine Sicherheitsreserve und auch die Abmessung der Transporteinheit in Bewegungsrichtung abgebildet sein können.

Sowohl der Mindestabstand, als auch die Kollisionsvermeidungsdistanz werden dabei als vorzugebende Parameter angesehen, ohne anzugeben, wie diese ermittelt werden. Um allfällige Kollisionen sicher zu vermeiden werden diese aber in der Regel konservativ gesetzt. Das führt aber dazu, dass in den allermeisten Fällen, hintereinander fahrende Transporteinheiten nicht so nahe hintereinander fahren können, wie es an sich möglich wäre. Das beschränkt natürlich auch die Anzahl der pro Zeiteinheit entlang der Transportstrecke bewegbaren Transporteinheiten, was in vielen Förderanwendungen nachteilig ist.

Es ist eine Aufgabe der gegenständlichen Erfindung, ein Verfahren anzugeben, mit dem auf einfache Weise eine Kollision von Transporteinheiten, die entlang einer Förderstrecke eines Langstatorlinearmotors bewegt werden, verhindert werden kann und dabei ein einzuhaltender Mindestabstand zweiter hintereinander fahrender Transporteinheiten optimiert werden kann.

Diese Aufgabe wird mit den Merkmalen der unabhängigen Ansprüche gelöst. Damit ist es mögliche, den Mindestabstand an den jeweiligen Ort der Transporteinheiten anzupassen. Wenn zumindest eine Transporteinheit auf einem gekrümmten Förderabschnitt bewegt wird, kann ein anderer Mindestabstand verwendet werden, als bei zwei auf einem geraden Förderabschnitt bewegten Transporteinheiten. Auch auf Förderabschnitt mit unterschiedlichen Kurven kann entsprechend reagiert werden, in dem unterschiedliche Mindestabstände in Abhängigkeit von der Kurve oder sogar in Abhängigkeit von der Position einer Transporteinheit in der Kurve verwendet werden. Damit kann abhängig von der jeweiligen Position entlang der Förderstrecke immer ein möglichst optimaler Mindestabstand zwischen zwei hintereinander fahrenden Transporteinheiten verwendet werden, womit auch der Gesamtdurchsatz von Transporteinheiten entlang der Förderstrecke erhöht werden kann.

Erfindungsgemäß wird der einzuhaltende Mindestabstand in Abhängigkeit von den Abmessungen der beiden Transporteinheiten verändert werden, womit auch auf die jeweiligen Abmessungen der Transporteinheiten und auch auf die zu befördernden Teile Rücksicht genommen werden kann.

In der erfindungsgemäßen Ausgestaltung wird der Mindestabstand aus den Ausdehnungen in Förderrichtung der beiden Transporteinheiten ermittelt und zu einer Ausdehnung zumindest einer Transporteinheit auf einem gekrümmten Förderabschnitt ein Positionsanteil in Abhängigkeit von der Position und/oder in Abhängigkeit von der Abmessung der Transporteinheit hinzugefügt. Das kann vorteilhafterweise durchgeführt werden, indem für eine vorausfahrende Transporteinheit eine größte, auf einen Referenzpunkt der Transporteinheit bezogene Ausdehnung der Transporteinheit gegen die Förderrichtung und für eine hinterherfahrende Transporteinheit eine größte, auf einen Referenzpunkt der Transporteinheit bezogene Ausdehnung der Transporteinheit in Förderrichtung ermittelt werden und der Mindestabstand als Summe der beiden Ausdehnungen in und gegen die Förderrichtung und des zumindest einen Positionsanteils ermittelt wird.

Wenn als Referenzpunkt ein Mittelpunkt der Transporteinheiten verwendet wird, kann vereinfacht der Mindestabstand als Summe der jeweils halben Ausdehnung der beiden Transporteinheiten in Förderrichtung und des zumindest eines Positionsanteils ermittelt werden.

Um die örtlichen Gegebenheiten des Förderabschnittes noch besser Rücksicht nehmen zu können, kann ein Positionsanteil in Förderrichtung gesehen vor und hinter der Transporteinheit auch verschieden sein.

Eine einfach zu realisierende erfindungsgemäße Ausgestaltung sieht vor, dass für eine Transporteinheit auf einem gekrümmten Förderabschnitt mit einer radialen Projektion durch einen Krümmungskreismittelpunkt des Förderabschnittes eine auf eine Referenzbahn projizierte Ausdehnung der Transporteinheit in Richtung der Förderrichtung ermittelt wird und der Mindestabstand mit dieser projizierten Ausdehnung ermittelt wird. Das kann mit einfachen arithmetischen Operationen durchgeführt werden, was auch eine laufende Berechnung des Mindestabstandes im Betrieb der Fördereinrichtung ermöglicht.

Um mit dem erfindungsgemäßen Verfahren auch im Bereich einer Weiche ein Kollisionsvermeidung realisieren zu können, kann für eine Durchfahrt von zwei hintereinanderfahrenden Transporteinheiten durch eine Weiche mit zwei Förderabschnitten, wobei jede der beiden Transporteinheiten im Bereich der Weiche auf einem anderen Förderabschnitt bewegt wird, vorgesehen sein, dass eine Transporteinheit auf dem jeweiligen Förderabschnitt auf den jeweils anderen Förderabschnitt projiziert wird, und die Einhaltung des Mindestabstandes zwischen der projizierten Transporteinheit und der anderen Transporteinheit geprüft wird. Hierbei kann es vorteilhaft sein, bei der Ermittlung des Mindestabstandes im Bereich der Weiche zusätzlich die Geometrie der Weiche zu berücksichtigen.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt

Fig.1 ein Ausführungsbeispiel einer Fördereinrichtung in Form eines Langstatorlinearmotors,
Fig.2 einen Querschnitt durch die Förderstrecke und eine Transporteinheit,
Fig.3 ein Abschnitt der Förderstrecke der Fördereinrichtung mit zwei Transporteinheiten,
Fig.4 der Abstand zwischen zwei Transporteinheiten auf einem geraden Abschnitt,
Fig.5 der Abstand zwischen zwei Transporteinheiten auf einem gekrümmten Abschnitt,
Fig.6 eine Weiche der Förderstrecke mit zwei Transporteinheiten.

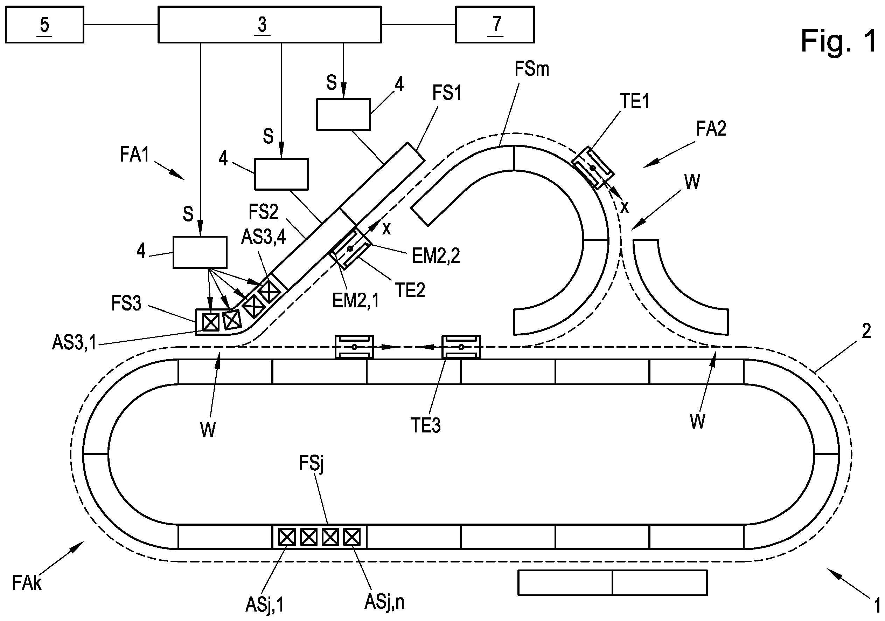

In Fig.1 ist beispielhaft ein beliebiger Aufbau einer Fördereinrichtung 1 mit einer Förderstrecke 2 (angedeutet durch die strichlierte Linie) dargestellt. Die Fördereinrichtung 1 ist als Langstatorlinearmotor ausgeführt und es sind eine Vielzahl von Transporteinheiten TEi, $i \in \mathbb{N}$ vorgesehen, die entlang der Förderstrecke 2 bewegt werden können. Die Förderstrecke 2 wird im Wesentlichen durch den stationären Langstator des Langstatorlinearmotors 1 vorgegeben. Im gezeigten Ausführungsbeispiel sind eine Reihe von Fördersegmente FSj, $j \in \mathbb{N}$ vorgesehen, die die Bahn der Transporteinheiten TEi, also die Förderstrecke 2, definieren. Einzelne Förderabschnitte FAk, $k \in \mathbb{N}$ der Förderstrecke 2 können durch eine Anzahl von nebeneinander angeordneten Fördersegmente FSj gebildet werden. Die Fördersegmente FSj, und damit auch die Förderabschnitte FAk, bilden dabei einen Teil des Langstators des Langstatorlinearmotors. Die Fördersegmente FSj, oder allgemein die Förderabschnitte FAk, sind an einer geeigneten Konstruktion ortsfest angeordnet und bilden in der Regel auch Führungselemente aus, entlang denen die Transporteinheiten TEi geführt und gehalten werden können. Jeder Förderabschnitt FAk umfasst zumindest ein Fördersegment FSj, normalerweise mehrere Fördersegmente FSj. Einzelne Förderabschnitte FAk, bzw. Fördersegmente FSj einzelner Förderabschnitte FAk (wie z.B. die Fördersegmente FS1, FSm), können sich entlang der Förderstrecke 2 in Förderrichtung x an unterschiedlichen Seiten einer Transporteinheit TEi zum Teil auch überlappen, insbesondere an Stellen der Förderstrecke 2 an der ein Übergang von einem Förderabschnitt FAk auf einer Seite auf einen anderen Förderabschnitt FAk auf der anderen Seite (wie z.B. vom Förderabschnitt FA1 auf den Förderabschnitt FA2) stattfindet. Es kann auch vorgesehen sein, dass abschnittsweise an beiden Seiten der Förderstrecke 2 Fördersegmente FSj angeordnet sind. Es können auch Weichen W vorgesehen sein, an denen (je nach Förderrichtung einer Transporteinheit TEi) zwei Förderabschnitte FAk zusammengeführt werden oder eine Aufteilung auf zwei Förderabschnitte FAk stattfindet. Es ist nachvollziehbar, dass damit eine nahezu beliebig aufgebaute Förderstrecke 2 gebildet werden kann, die sich auch nicht nur in einer zweidimensionalen Ebene befinden muss, sondern sich auch dreidimensional erstrecken kann. Jedes Fördersegment FSj umfasst eine Anzahl n von in Förderrichtung x nebeneinander angeordneten Antriebsspulen ASj,n, $j \in \mathbb{N}$, $n \in \mathbb{N}$, wobei die Anzahl n nicht bei jedem Fördersegment FSj gleich sein muss. In Fig.1 sind der Übersicht halber nur Antriebsspulen ASj,n einiger Fördersegmente FSj dargestellt. Jede Transporteinheit TEi umfasst eine Anzahl m von Erregungsmagnete EMi,m, $i \in \mathbb{N}$, $m \in \mathbb{N}$ (Permanentmagnete oder Elektromagnete), vorzugsweise an beiden Seiten (bezogen auf die Förderrichtung x, die durch die Pfeile an den Transporteinheiten TEi angedeutet ist) der Transporteinheit TEi. Die Antriebsspulen ASj,n erzeugen ein bewegtes Magnetfeld und wirken im Betrieb der Fördereinrichtung 1 in bekannter Weise nach dem Motorprinzip mit den Erregungsmagneten EMi,m der Transporteinheiten TEi im Bereich der Antriebsspulen ASj,n zusammen. Werden die Antriebsspulen ASj,n im Bereich einer Transporteinheit TEi durch Anlegen einer Spulenspannung mit einem Spulenstrom bestromt, entsteht ein magnetischer Fluss der in Zusammenwirken mit den Erregungsmagneten EMi,m eine Kraft auf die Transporteinheit TEi bewirkt. Diese Kraft kann je nach Spulenstrom bekanntermaßen eine vortriebskraftbildende und/oder auch eine seitenkraftbildende Kraftkomponente umfassen. Die vortriebskraftbildende Kraftkomponente dient im Wesentlichen der Bewegung der Transporteinheit TEi in Förderrichtung und die seitenkraftbildende Kraftkomponente kann zur Führung der Transporteinheit TEi, aber auch zur Festlegung der Bahn der Transporteinheit TEi in einer Weiche W genutzt werden. Auf diese Weise kann jede Transporteinheit TEi einzeln und unabhängig voneinander entlang der Förderstrecke 2 bewegt werden, indem die Antriebsspulen ASj,n im Bereich jeder Transporteinheit TEi gemäß der durchzuführenden Bewegung mit einem entsprechenden Spulenstrom bestromt werden.

Diese grundlegende Funktionsweise eines Langstatorlinearmotors ist hinlänglich bekannt, sodass nicht weiter darauf eingegangen wird. Für die gegenständliche Erfindung ist es auch unerheblich, wie die Transporteinheiten TEi, die Fördersegmente FSj, die Antriebsspulen ASj,n, die Erregungsmagnete EMi,m, usw. konstruktiv konkret ausgestaltet und geformt sind, weshalb auch darauf nicht näher eingegangen wird.

Um die Bewegung der einzelnen Transporteinheiten TEi zu steuern ist eine Transporteinheitenregelung 3 (Hardware und/oder Software) vorgesehen, in der die Sollwerte S für die Bewegung der Transporteinheiten TEi generiert oder ermittelt werden. Selbstverständlich können gleichwertig auch mehrere Transporteinheitenregelungen 3 vorgesehen sein, die jeweils einem Teil der Fördereinrichtung 1, z.B. einem Förderabschnitt FAk, zugeordnet sind und die Bewegung der Transporteinheiten TEi auf diesem Teil kontrollieren. Zusätzlich können noch Segmentregelungseinheiten 4 (Hardware und/oder Software) vorgesehen sein, die einem Fördersegment FSj (oder auch mehreren Fördersegmenten FSj oder auch einem Teil eines Fördersegments FSj) zugeordnet sind und die die Sollwertvorgaben der zugehörigen Transporteinheitenregelung 3 für eine Transporteinheit TEi in Spulenströme für die zugeordneten Antriebsspulen ASj,n, also in konkrete Stellgrößen wie Spulenspannungen, umsetzen. Die Segmentregelungseinheiten 4 könnten aber auch in einer Transporteinheitenregelung 3 implementiert oder integriert sein. Die Stellgrößen können dann in einer nicht dargestellten Leistungselektronik verwendet werden, um eine elektrische Größe, wie z.B. Strom oder Spannung, zu erzeugen und an die Antriebsspulen ASj,n anzulegen. Als Sollwerte S können beispielsweise Positionen p der Transporteinheiten TEi entlang der Förderstrecke 2, oder gleichwertig auch Geschwindigkeiten v, vorgegeben werden. Das bedeutet, dass in jedem Taktschritt der Regelung für jede Transporteinheit TEi ein neuer Sollwert S berechnet oder vorgegeben wird, der durch die Segmentregelungseinheiten 4 eingeregelt wird. In einer Segmentregelungseinheit 4 ist demnach ein geeigneter Regler implementiert, der die Sollwertvorgabe in eine geeignete Stellgröße, beispielsweise in eine Vortriebskraft oder einen Spulenstrom, umsetzt, aus der dann wiederum beispielsweise Spulenspannungen für die einzelnen Antriebsspulen ASj,n ermittelt werden.

Die gewünschte Bewegung der Transporteinheiten TEi entlang der Förderstrecke 2 kann auch durch eine Fördereinrichtungsregelung 5 (Hardware und/oder Software) vorgegeben werden, in der beispielsweise eine Routenberechnung (z.B. welchen Weg soll einer Transporteinheit TEi nehmen?), eine Weichenarbitrierung (z.B. welche Transporteinheit TEi darf in eine Weiche einfahren?), eine Deadlockvermeidung (z.B. blockieren sich zwei Transporteinheiten TEi gegenseitig?), usw. stattfinden kann, um die Transporteinheiten TEi auf gewünschte Weise entlang der Förderstrecke 2 zu bewegen, z.B. um einen Fertigungs-, Montage-, oder anderen Prozess zu realisieren. Diese Bewegungsvorgabe für die Transporteinheiten TEi wird in der Transporteinheitenregelung 3 in Sollwertvorgaben für die Transporteinheiten TEi umgesetzt. Dazu kann einer Transporteinheitenregelung 3 auch ein Bewegungsprofil, z.B. ein Weg-Zeit-Profil, oder eine Zielposition oder eine Zielgeschwindigkeit, aus der dann ein Bewegungsprofil berechnet wird, vorgegeben werden.

An sich sollte in der Fördereinrichtungsregelung 5 oder der Transporteinheitenregelung 3 sichergestellt werden, dass es auf der Förderstrecke 2 zu keinen unzulässigen Zuständen kommt. Das umfasst in erster Linie die Vermeidung einer Kollision zweier Transporteinheiten TEi auf der Förderstrecke 2. Dazu kann auch eine eigene Kollisionsüberwachungseinheit 7 (Hardware und/oder Software) vorgesehen sein, die auch in der Fördereinrichtungsregelung 5 oder der Transporteinheitenregelung 3 implementiert oder integriert sein kann. Zur Vermeidung einer Kollision ist insbesondere ein gewisser Mindestabstand M zwischen zwei hintereinander fahrenden Transporteinheiten TEi, TEi+1 einzuhalten. Der einzuhaltende Mindestabstand M wurde bisher einfach konfiguriert, um eine Kollision sicher zu vermeiden.

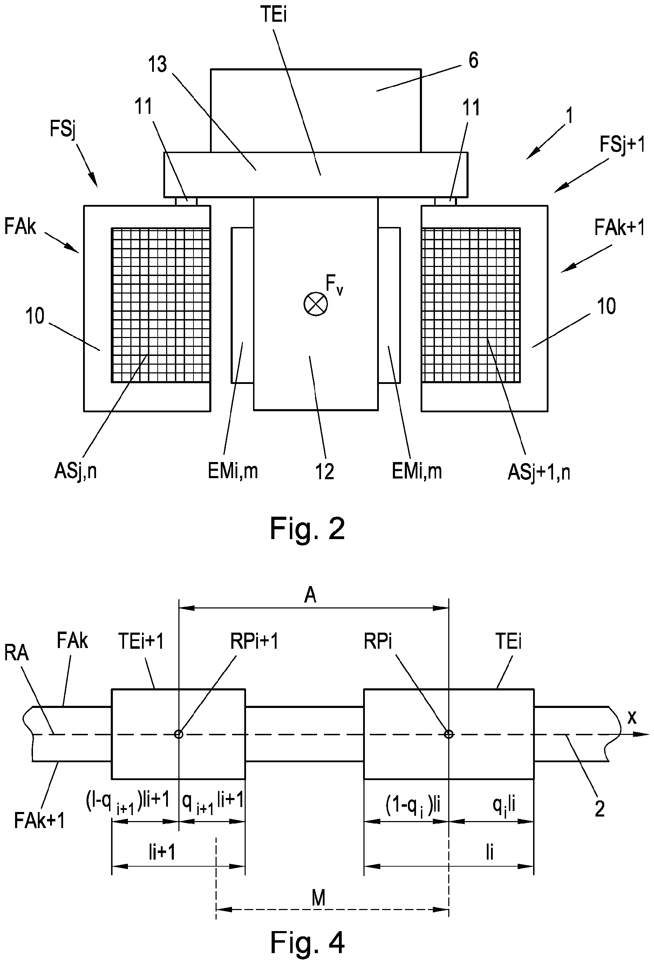

Eine Transporteinheit TEi ist beispielsweise wie in Fig.2 dargestellt ausgeführt. Fig.2 zeigt einen Querschnitt durch einen beliebigen Teil der Förderstrecke 2 mit Förderabschnitten FAk, FAk+1 an beiden Seiten und einer darauf bewegten Transporteinheit TEi. Eine Transporteinheit TEi besteht im gezeigten Ausführungsbeispiel aus einem Grundkörper 12 und einer daran angeordneten Komponentenaufnahme 13 zur Aufnahme eines zu transportierenden Teiles 6, wobei die Komponentenaufnahme 13 grundsätzlich an einer beliebigen Stelle des Grundkörpers 12 angeordnet sein kann, insbesondere auch an der Unterseite für hängende Teile. Am Grundkörper 12 ist, bevorzugt an beiden Seiten der Transporteinheit TEi, die Anzahl der Erregungsmagnete EMi,m angeordnet. Die Förderstrecke 2 der Fördereinrichtung 1, bzw. eines Förderabschnitts FAk, FAk+1, wird durch eine stationäre Führungskonstruktion 10 gebildet, an der die Antriebsspulen ASj,n, ASj+1,n angeordnet sind. Der Grundkörper 12 mit den beidseitig angeordneten Permanentmagneten als Erregungsmagnete EMi,m ist im gezeigten Ausführungsbeispiel zwischen den Antriebsspulen ASj,n, ASj+1,n angeordnet. Damit ist jeweils zumindest ein Erregungsmagnet EMi,m einer Antriebsspule ASj,n, ASj+1,n (oder einer Gruppe von Antriebsspulen) gegenüberliegend angeordnet und wirkt damit mit zumindest einer Antriebsspule ASj,n, ASj+1,n zur Erzeugung einer Vortriebskraft $F_v$ zusammen. Damit ist die Transporteinheit TEi zwischen der Führungskonstruktion 10 mit den Antriebsspulen ASj,n, ASj+1,n und entlang der Förderstrecke 2 bewegbar. Selbstverständlich sind auch andere Anordnungen der Antriebsspulen ASj,n, ASj+1,n und der damit zusammenwirkenden Erregungsmagnete EMi,m denkbar. Z.B. ist es auch möglich, die Antriebsspulen ASj,n, ASj+1,n innen und die Erregungsmagnete EMi,m nach innen gerichtet und die Antriebsspulen ASj,n, ASj+1,n umgreifend anzuordnen. Gleichfalls können an einem Förderabschnitt FAk, FAk+1 auch nur auf einer Seite (in Förderrichtung x gesehen) Antriebsspulen ASj,n, ASj+1,n auf einer Führungskonstruktion 10 vorgesehen sein.

Am Grundkörper 12 und/oder an der Komponentenaufnahme 13 können natürlich auch noch (hier aus Gründen der Übersichtlichkeit nicht dargestellte oder nur angedeutete) Führungselemente 11, wie Rollen, Räder, Gleitflächen, Magnete, etc., vorgesehen sein, um die Transporteinheit TEi entlang der Transportstrecke 2 zu führen. Die Führungselemente 11 der Transporteinheit TE1 wirken dabei zur Führung mit der stationären Führungskonstruktion 10 zusammen, z.B. in dem sich die Führungselemente 11 an der Führungskonstruktion 10 abstützen, daran abgleiten oder abrollen, etc. Die Führung der Transporteinheit TEi kann aber neben mechanischen Führungen auch (alternativ oder zusätzlich) durch das Vorsehen von Führungsmagneten erfolgen.

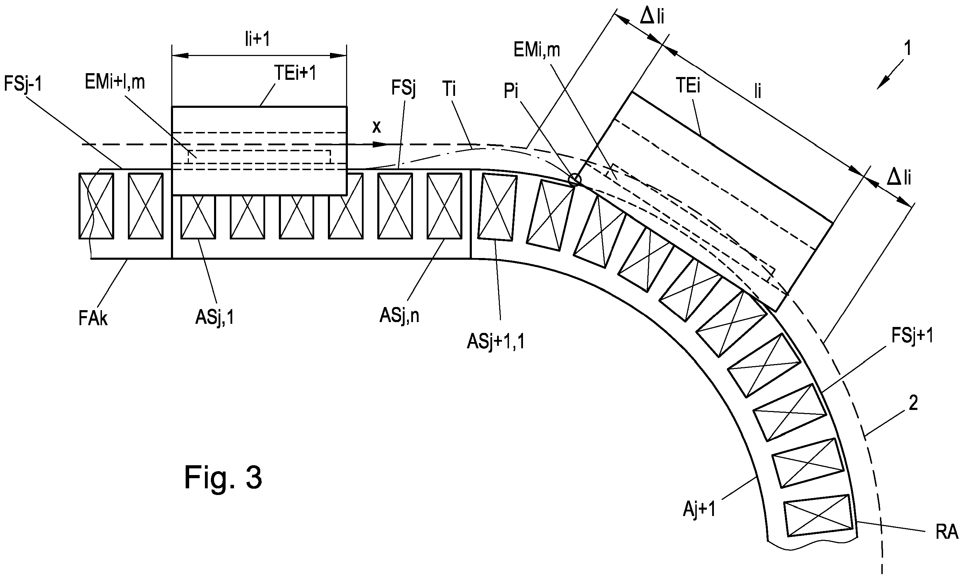

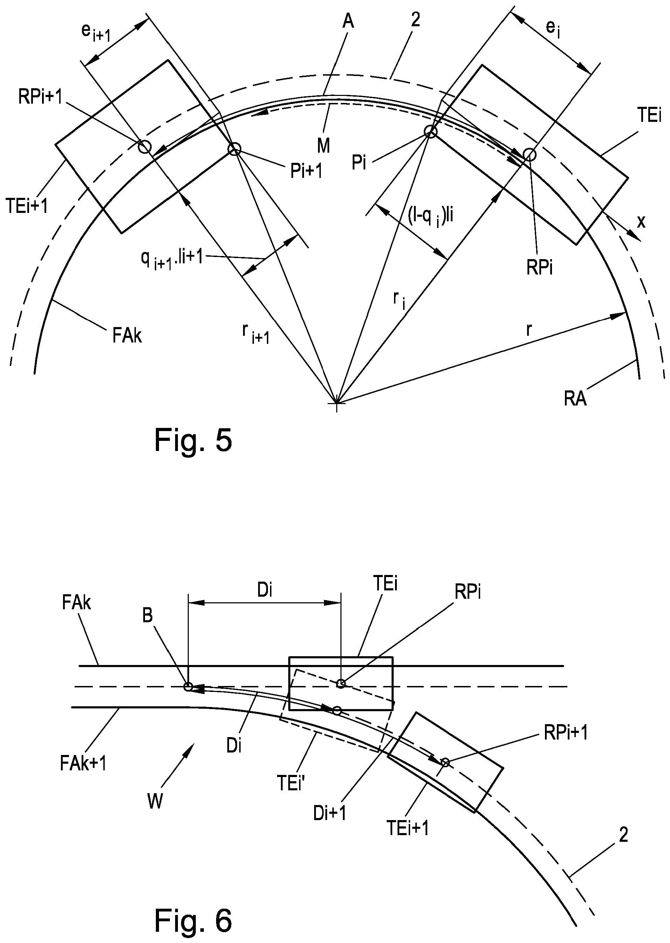

In Fig.3 ist ein Teil einer Förderstrecke 2 einer Fördereinrichtung 1 dargestellt. Dargestellt ist ein beliebiger Förderabschnitt FAk mit Fördersegmenten FSj-1, FSj, FSj+1, wobei das Fördersegment FSj+1 gekrümmt ist und die anderen gerade. An jedem Fördersegment FSj-1, FSj, FSj+1 sind wie beschrieben Antriebsspulen ASj,n hintereinander angeordnet. Die Regelungseinheiten 3, 4, 5 sind aus Gründen der Übersichtlichkeit nicht dargestellt. Die Fördersegmente FSj-1, FSj, FSj+1, oder allgemein der Förderabschnitt FAk, sind ortsfest angeordnet. Entlang der Fördersegmente FSj-1, FSj, FSj+1, oder allgemein entlang des Förderabschnittes FAk, bewegen sich die Transporteinheiten TEi, TEi+1 in einem bestimmten Abstand A hintereinander. Der Abstand A wird natürlich auf eine vorgegebene Referenzbahn RA der Transporteinheit TEi entlang der Förderstrecke 2 bezogen, beispielsweise in der Mitte zwischen zwei in Förderrichtung x gesehen nebeneinander liegenden Förderabschnitten FAk, FAk+1 (wie in Fig.4 dargestellt), oder in der Mitte des Luftspaltes zwischen den Antriebsspulen ASj,n, ASj+1,n und den Erregungsmagneten EMi,m, oder auch an der einer Transporteinheit TEi zugewandten Seitenfläche eines Förderabschnittes FAk, FAk+1 (wie in Fig.5 dargestellt), und wird auf einem gekrümmten Abschnitt als Bogenlänge angesetzt. An dieser Referenzbahn RA wird vorzugsweise auch eine Sollposition für die Regelung der Bewegung der Transporteinheit TEi vorgegeben.

Wenn eine Transporteinheit TEi entlang eines gekrümmten Abschnittes der Förderstrecke 2 bewegt wird, wird die an sich starre Transporteinheit TEi aufgrund der Führung am gekrümmten Abschnitt auslenken. Ein Punkt Pi an der Transporteinheit TEi folgt damit bei Bewegung der Transporteinheit TEi entlang der Förderstrecke 2 einer Trajektorie Ti, die im Wesentlichen abhängig ist von den Abmessungen der Transporteinheit TEi und der Krümmung. Ein mit der Transporteinheit TEi beförderter Teil 6 wird dabei berücksichtigt. D.h., dass der Teil 6 als Teil der Transporteinheit TEi gesehen wird, der die Abmessung mitbestimmen kann, wenn der Teil 6 beispielsweise in Förderrichtung x und/oder quer dazu über die Transporteinheit TEi hinausragt. Verschiedene Punkte Pi an der Transporteinheit TEi können dabei natürlich unterschiedliche Trajektorien Ti bewirken. Durch diese Auslenkung kann sich aber auch der Abstand A zwischen der Transporteinheit TEi, genauer gesagt zwischen dem Punkt Pi der Transporteinheit TEi, und einem Punkt Pi+1 einer dahinter fahrenden Transporteinheit TEi+1 verkleinern.

Um in dieser Situation eine mögliche Kollision zwischen der vorausfahrenden Transporteinheit TEi und einer nachfolgenden Transporteinheit TEi+1 zu vermeiden, wird erfindungsgemäß der einzuhaltende Mindestabstand M zwischen den beiden Transporteinheiten TEi, TEi+1 verändert, in der Regel vergrößert, um eine Auslenkung auszugleichen.

Die gleiche Situation ergibt sich aber auch, wenn die vorausfahrende Transporteinheit TEi auf einem geraden Abschnitt bewegt wird, die dahinter fahrende Transporteinheit TEi+1 aber auf einem gekrümmten Abschnitt. Auch hierbei können sich alleine durch die Auslenkung der Transporteinheit TEi+1 auf dem gekrümmten Abschnitt die beiden Transporteinheiten TEi, TEi+1 näher kommen, sodass eine Kollision ohne Gegenmaßnahme möglicherweise nicht vermieden werden kann.

Aber auch wenn die beiden Transporteinheiten TEi, TEi+1 beide auf einem gekrümmten Abschnitt bewegt werden, kann sich diese Situation ergeben, dass sich durch die Auslenkung einer (oder auch beider) Transporteinheiten TEi, TEi+1 eine unerwünschte Annäherung der beiden Transporteinheiten TEi, TEi+1 ergibt. Dabei kann auch der Fall eintreten, dass sich die beiden Transporteinheiten TEi, TEi+1 alleine durch die Auslenkung näher kommen, sodass eine Kollision ohne Gegenmaßnahme möglicherweise nicht vermieden werden kann.

Erfindungsgemäß wird daher der Mindestabstand M zwischen zwei hintereinander fahrenden Transporteinheiten TEi, TEi+1 von der Position entlang der Förderstrecke 2 abhängig gemacht. Hierbei wird insbesondere für den Fall, dass beide Transporteinheiten TEi, TEi+1 auf einem geraden Förderabschnitt FAk bewegt werden, ein anderer Mindestabstand M verwendet, als für den Fall, dass zumindest eine der beiden Transporteinheiten TEi, TEi+1 auf einem gekrümmten Förderabschnitt FAk bewegt wird. Dabei wird der einzuhaltende Mindestabstand M im zweiten Fall in der Regel größer sein, als im ersten Fall. Der Mindestabstand M zwischen zwei hintereinander fahrenden Transporteinheiten TEi, TEi+1 kann sich damit dynamisch im Betrieb der Fördereinrichtung 1 ändern. Damit kann der einzuhaltende Mindestabstand M zwischen zwei Transporteinheiten TEi, TEi+1, die beide auf einem geraden Abschnitt bewegt werden, beispielsweise kleiner sein, als ein einzuhaltender Mindestabstand M zwischen zweier Transporteinheiten TEi, TEi+1 von denen zumindest eine auf einem gekrümmten Abschnitt bewegt wird.

Dabei kann es natürlich sein, dass der Mindestabstand M nicht nur von der Position der beiden Transporteinheiten TEi, TEi+1 entlang der Förderstrecke 2 abhängig ist, sondern auch von den Abmessungen der Transporteinheiten TEi, TEi+1 (gegebenenfalls mit Berücksichtigung des beförderten Teiles 6). Transporteinheiten TEi, TEi+1 mit unterschiedlichen Ausdehnungen li, li+1 in Förderrichtung x und/oder mit unterschiedlichen Breiten oder Formen können natürlich in gekrümmten Förderabschnitten FAk unterschiedliche Auslenkungen bewirken, was im einzuhaltenden Mindestabstand M berücksichtigt werden kann.

Die Anpassung des Mindestabstandes M kann dabei kontinuierlich erfolgen, also beispielsweise in jedem vorgegebenen Taktschritt der Regelung der Bewegung der Transporteinheiten TEi, TEi+1 an der jeweiligen Position der Transporteinheiten TEi, TEi+1. Die Anpassung kann aber auch diskontinuierlich erfolgen. Wenn beispielsweise beide Transporteinheiten TEi, TEi+1 hintereinander auf einem geraden Förderabschnitt FAk, FAk+1 bewegt werden kann ein erster Mindestabstand M herangezogen werden. Wenn zumindest eine der hintereinander fahrenden Transporteinheiten TEi, TEi+1 auf einem gekrümmten Förderabschnitt FAk bewegt wird, kann ein anderer Mindestabstand M herangezogen werden.

In Fig.4 ist beispielsweise ein gerader Abschnitt der Förderstrecke 2 dargestellt, auf dem zwei Transporteinheiten TEi, TEi+1 hintereinander in Förderrichtung x bewegt werden. Der Mindestabstand M wird auf einen Referenzpunkt RPi, RPi+1 auf den Transporteinheiten TEi, TEi+1 bezogen, beispielsweise auf einen Mittelpunkt (wie in Fig.4) oder auf den vordersten oder hintersten Punkt (in Förderrichtung x gesehen), oder auf einen beliebigen anderen Punkt. Ebenso wird der Abstand A zwischen den beiden Transporteinheiten TEi, TEi+1 auf diesen Referenzpunkt RPi, RPi+1 bezogen. Als Referenzbahn RA wird beispielsweise die quer zur Förderrichtung x gesehene Mitte zwischen zwei benachbarten Förderabschnitten FAk, FAk+1 betrachtet, was im Falle des geraden Förderabschnitts FAk aber ohnehin keine Bedeutung hat.

Wenn man davon ausgeht, dass sich eine Transporteinheit TEi, TEi+1 vom Referenzpunkt RPi, RPi+1 in Förderrichtung x und gegen die Förderrichtung x unterschiedlich weit erstreckt, was mit einem Faktor q ausgedrückt werden kann. Somit ergibt sich der Mindestabstand M (im dargestellten Beispiel) in trivialer Weise zumindest als $M = [q_{i+1} \cdot l_{i+1} + (1 - q_i) \cdot l_i]$ und der Abstand A muss zumindest diesen Mindestabstand M aufweisen. Der Abstand A kann dabei beispielsweise aus den aktuellen Istpositionen (oder auch Sollpositionen) der beiden Transporteinheiten TEi, TEi+1 (die wiederum auf die Referenzpunkte RPi, RPi+1 bezogen sind), die in der Regelung der Bewegung bekannt sind, ermittelt werden. Beispielsweise werden die aktuellen Istpositionen mittels Positionssensoren erfasst.

Falls zumindest eine Transporteinheit TEi, TEi+1 auf einem gekrümmten Förderabschnitt FAk bewegt wird, muss der für einen geraden Abschnitt verwendete Mindestabstand M nicht mehr ausreichen, wie anhand der Fig.5 erläutert wird. Hier bewegen sich zwei Transporteinheiten TEi, TEi+1 auf einem gekrümmten Förderabschnitt FAk (z.B. in Form eines Kreisbogens). An der Referenzbahn RA (in diesem Fall die Seitenfläche des Förderabschnittes FAk) ergibt sich ein Abstand A als Bogenlänge zwischen den beiden Transporteinheiten TEi, TEi+1 (bezogen auf den Referenzpunkt RPi, RPi+1). Der Abstand A kann dabei wieder aus den Istpositionen (oder auch Sollpositionen) ermittelt werden. Aufgrund der Auslenkung der Transporteinheiten TEi, TEi+1 nähern sich die beiden Transporteinheiten TEi, TEi+1 radial innen an. Damit kann es sein, dass sich die beiden Transporteinheiten TEi, TEi+1 in Abhängigkeit von den Abmessungen und/oder der Krümmung des Förderabschnitt FAk radial innen berühren, obwohl der Abstand A den Mindestabstand M für den geraden Abschnitt nicht unterschreitet. In diesem Fall ist daher der einzuhaltende Mindestabstand M in Abhängigkeit von der Position (z.B. Krümmung der Kurve an der gegebenen Position) und/oder von den Abmessungen zu erhöhen.

Zur Realisierung der positionsabhängigen Veränderung des Mindestabstandes M kann beispielsweise jeder Transporteinheit TEi in Abhängigkeit von ihrer Position entlang der Förderstrecke 2 am entsprechenden Ende (in Förderrichtung x gesehen) der Transporteinheit TEi ein Positionsanteil Δli zur Ausdehnung li in Förderrichtung x hinzugefügt werden (wie in Fig.3 angedeutet). Bei der davor fahrenden Transporteinheit TEi wird der Positionsanteil Δli zumindest am hinteren Ende hinzugefügt und bei der dahinter fahrenden Transporteinheit TEi+1 zumindest am vorderen Ende. Wenn mehrere Transporteinheiten TEi, TEi+1 hintereinanderfahren kann an einer Transporteinheit TEi unter Umständen auch an beiden Enden ein Positionsanteil Δli hinzugefügt werden. Dabei kann der Positionsanteil Δli in Förderrichtung x gesehen vor und hinter der Transporteinheit TEi auch unterschiedlich sein. Dieser Positionsanteil Δli kann auch von den Abmessungen der Transporteinheit TEi abhängig sein.

Der Mindestabstand M, der damit zwischen zwei Transporteinheiten TEi, TEi+1, wobei zumindest eine davon auf einem gekrümmten Förderabschnitt FAk bewegt wird, einzuhalten ist, kann sich dann analog zum Mindestabstand für einen geraden Abschnitt aus den beiden Ausdehnungen li, li+1 in Förderrichtung x und den beiden Positionsanteilen Δli, Δli+1 an den entsprechenden Enden der beiden Transporteinheiten TEi, TEi+1 ergeben, also beispielsweise $M = [(q_{i+1} \cdot l_{i+1} + \Delta l_{i+1}) + ((1 - q_i) \cdot l_i + \Delta l_i)]$. Erstrecken sich die beiden Transporteinheiten TEi, TEi+1 in Förderrichtung x und gegen die Förderrichtung x bezogen auf die Referenzpunkte RPi, RPi+1 gleich weit, vereinfacht sich die Ermittlung des Mindestabstandes M beispielsweise zu $M = l_i/2 + \Delta l_i + l_{i+1}/2 + \Delta l_{i+1}$. Für eine Transporteinheit TEi+1 auf einem geraden Abschnitt kann der Positionsanteil Δli+1 vor und hinter der Transporteinheit TEi+1 Null sein. Für eine Transporteinheit TEi auf einem gekrümmten Abschnitt kann ein bestimmter Positionsanteil Δli vor und hinter der Transporteinheit TEi (die auch gleich sein können) bestimmt werden.

Nachdem die Abmessungen der Transporteinheiten TEi, TEi+1 (gegebenenfalls mit dem beförderten Teil 6) natürlich bekannt sind, genauso wie die Geometrie der Förderstrecke 2, können die Auslenkungen der Transporteinheiten TEi, TEi+1 an verschiedenen Positionen entlang der Förderstrecke 2 einfach berechnet werden, gegebenenfalls auch in Abhängigkeit von den Abmessungen der Transporteinheiten TEi, TEi+1. Daraus kann dann der benötigte Positionsanteil Δli, Δli+1 für eine Transporteinheit TEi, TEi+1 an jeder gewünschten Position oder auch nur für verschiedene Förderabschnitt FAk (z.B. gerade, gekrümmt) ermittelt werden. Die Positionsanteile Δli, Δli+1 können dann zu jeder Transporteinheit TEi, TEi+1 beispielsweise in der Steuerung der Fördereinrichtung 1, beispielsweise in der Fördereinrichtungsregelung 5 oder in einer Kollisionsüberwachungseinheit 7 (Hardware und/oder Software), in Abhängigkeit von der Position, und gegebenenfalls auch in Abhängigkeit von den Abmessungen der Transporteinheiten TEi, TEi+1, gespeichert werden. Nachdem nur eine begrenzte Anzahl verschiedener Transporteinheiten TEi, TEi+1 vorhanden sein wird, kann das natürlich dahingehend vereinfacht werden, dass nur die Positionsanteile $\Delta li$, $\Delta li+1$ der verschiedenen Transporteinheiten TEi, TEi+1 gespeichert werden und dann nur der richtige Positionsanteil $\Delta li$, $\Delta li+1$ ausgelesen werden muss, was einfach zu realisieren ist. Alternativ kann in der Steuerung auch eine Formel oder ein mathematisches Modell hinterlegt sein, um aus der jeweiligen Position (z.B. aus der aktuellen Krümmung), und gegebenenfalls auch aus den Abmessungen einer Transporteinheit TEi, den jeweils aktuellen Positionsanteil $\Delta li$, $\Delta li+1$ zu berechnen.

Es kann aber auch geprüft werden, wann zwei hintereinander fahrende Transporteinheiten TEi, TEi+1, wobei zumindest eine auf einem gekrümmten Förderabschnitt FAk bewegt wird, kollidieren, beispielswise anhand einer Simulation der Bewegungen der Transporteinheiten TEi, TEi+1 entlang der Förderstrecke 2. Auch daraus kann ein einzuhaltender Mindestabstand M oder ein Positionsanteil $\Delta li$, $\Delta li+1$ bestimmt werden.

Die Transporteinheiten TEi, TEi+1 können auch durch einfache zweidimensionale Objekte, die die äußeren Konturen der Transporteinheiten TEi, TEi+1 (gegebenenfalls mit Teil 6) jeweils umgeben, modelliert werden. Dadurch können sich die Ausdehnungen li, li+1 ergeben oder eine Simulation der Bewegung kann vereinfacht werden. Vorteilhafterweise kann ein Rechteck mit einer Erstreckung in Förderrichtung x und einer Erstreckung gegen die Förderrichtung x verwendet werden, wobei das Rechteck die Form der Transporteinheit TEi vollständig umgibt. Es sind aber auch andere geometrische Objekte denkbar. Ebenso kann die tatsächliche Form der Transporteinheiten TEi, TEi+1 (gegebenenfalls mit Teil 6) verwendet werden, um den Mindestabstand M oder einen Positionsanteil $\Delta li$, $\Delta li+1$ zu ermitteln oder festzulegen.

Eine besonders einfach zu implementierende Ausführung wird anhand der Fig.5 beschrieben. Hier werden die Transporteinheiten TEi, TEi+1 als Rechtecke betrachtet, wobei auch andere Formen denkbar sind. Die einander zugewandten radial innen liegenden Punkte Pi, Pi+1 an den Transporteinheiten TEi, TEi+1, werden mit einer einfachen radialen Projektion durch den Krümmungskreismittelpunkt des gekrümmten Förderabschnittes FAk auf die Referenzbahn RA (Krümmungskreis mit Radius r) projiziert. Daraus ergeben sich projizierte Ausdehnungen $e_i$, $e_{i+1}$ der Transporteinheiten TEi, TEi+1 tangential zur Kurve mit Radius r. Diese projizierten Ausdehnungen ergeben sich einfach aus

$$e_i = (1 - q_i)li\frac{r}{r_i} \quad \text{und} \quad e_{i+1} = q_{i+1}li+1\frac{r}{r_{i+1}},$$ wobei sich die Radien $r_i$, $r_{i+1}$ aus den Breiten der Transporteinheiten TEi, TEi+1 (gegebenenfalls mit Teil 6) und den Referenzpunkten RPi, RPi+1 ergeben. Der einzuhaltende Mindestabstand M an der Referenzbahn RA folgt dann aus $M = e_i + e_{i+1}$. Wenn sich nur eine der beiden Transporteinheiten TEi, TEi+1 auf einem gekrümmten Förderabschnitt FAk, FAk+1 befindet, reicht es natürlich aus, nur für diese die projizierte Ausdehnung in Richtung der jeweils anderen Transporteinheit zu ermitteln. Für die andere Transporteinheit TEi, TEi+1 auf einem geraden Abschnitt entspricht die projizierte Ausdehnung e der tatsächlichen Ausdehnung q · l bzw. (1 - q) · l.

Wenn der gekrümmte Förderabschnitt FAk eine variable Krümmung haben sollte, dann kann im einfachsten Fall für die obige Ermittlung des Mindestabstandes M mittels radialer Projektion einfach ein Kreis mit dem größten Radius eines Krümmungskreises am gekrümmten Förderabschnitt FAk oder einem Teil davon verwendet werden.

Falls in einer Kurve in Förderrichtung x gesehen an beiden Seiten Förderabschnitte FAk, FAk+1 vorgesehen sein sollten, dann kann für die Ermittlung des einzuhaltenden Mindestabstandes M im Bereich der Kurve eine Betrachtung des radial innen liegenden Förderabschnittes FAk ausreichend sein.

Auf die oben beschriebene Weise kann auch die Einhaltung eines Mindestabstandes M bei der Durchfahrt von Transporteinheiten TEi, TEi+1 durch eine Weiche W überprüft werden, wie anhand der Fig.6 erläutert wird. Im Bereich einer Weiche W sind immer zwei Förderabschnitte FAk, FAk+1 vorgesehen, wobei zumindest einer davon gekrümmt ist. Eine Durchfahrt der zwei Transporteinheiten TEi, TEi+1 auf demselben gekrümmten Förderabschnitt FAk, FAk+1 entspricht dann der Ausführung nach Fig.3 oder Fig.5 kann einfach wie oben beschrieben abgehandelt werden, indem der einzuhaltende Mindestabstand M in Abhängigkeit von der Position und/oder von den Abmessungen der Transporteinheiten TEi, TEi+1 ermittelt und überprüft wird.

Eine Durchfahrt der zwei Transporteinheiten TEi, TEi+1 durch die Weiche auf unterschiedlichen Förderabschnitten FAk, FAk+1 wie in Fig.6 angedeutet kann dadurch bewerkstelligt werden, dass eine Transporteinheit TEi auf einem Förderabschnitt FAk auf den jeweils anderen Förderabschnitt FAk+1 projiziert wird, beispielsweise in der Kollisionsüberwachungseinheit 7. Damit erscheint die projizierte Transporteinheit TEi' virtuell auf dem jeweils anderen Förderabschnitt FAk+1, womit wieder die Einhaltung des Mindestabstandes M überprüft werden kann. Für die Projektion kann beispielsweise die Distanz Di einer Transporteinheit TEi auf dem Förderabschnitt FAk zu einem Weichenbeginn B herangezogen werden und diese Transporteinheit TEi mit der derselben Distanz Di zum Weichenbeginn B auf den an den anderen Förderabschnitt FAk+1 projiziert werden. Der Weichenbeginn B ist beispielsweise der Punkt, an dem die beiden Förderabschnitte FAk, FAk+1 im Bereich der Weiche beginnen zu divergieren. Allerdings ist im Bereich der Weiche W der Mindestabstand M in diesem Fall in der Regel anders zu bestimmen.

Wenn zwei Transporteinheiten TEi, TEi+1 im Bereich der Weiche W auf unterschiedlichen Förderabschnitten FAk, FAk+1 bewegt werden, kann es bei zumindest einer Transporteinheit TEi, TEi+1 aufgrund der Bewegung auf einem gekrümmten Abschnitt wiederum zu einer Auslenkung kommen. Diese Auslenkung kann dazu führen, dass sich der Abstand zwischen den beiden Transporteinheiten TEi, TEi+1 verändert. Dieser Zustand hängt nun aber auch von der Geometrie der Weiche W selbst ab, also von der Anordnung und der Geometrie (insbesondere der Krümmung) der beiden Förderabschnitte FAk, FAk+1 im Bereich der Weiche W. Beispielsweise wird eine Weiche W mit einem geraden Förderabschnitt FAk und einem gekrümmten Förderabschnitt FAk+1 andere Anforderungen an den Mindestabstand M haben, als eine Weiche mit zwei gekrümmten Förderabschnitten FAk, FAk+1. Auch dieser durch die Geometrie der Weiche bestimmte einzuhaltende Mindestabstand M zwischen zwei Transporteinheiten TEi, TEi+1 kann rechnerisch oder durch Simulation (beispielsweise wieder mit einem zweidimensionalen, die Transporteinheit TEi, TEi+1, gegebenenfalls samt Teil 6, umgebenden Objekt) ermittelt werden.

Für die Kollisionsvermeidung im Bereich der Weiche W kann dann für eine bestimmte Kombination von Transporteinheiten TEi, TEi+1 der größere der beiden Mindestabstände M für eine Durchfahrt auf demselben Förderabschnitt FAk, FAk+1 oder auf verschiedenen Förderabschnitten FAk, FAk+1 als einzuhaltender Mindestabstand M herangezogen werden. Alternativ könnte man aber auch die beiden Fälle unterscheiden und den jeweils passenden Mindestabstand M für die Weichenfahrt heranziehen.

Zum Mindestabstand M kann natürlich auch ein Sicherheitsabstand zusätzlich hinzugefügt werden, beispielsweise um Regelfehler (Schleppfehler) oder definierte Sicherheitsreserven zu berücksichtigen. Ebenso kann der Sicherheitsabstand auch einen von der aktuellen Geschwindigkeit und den Bremsparametern einer Transporteinheit TEi, TEi+1 (z.B. maximal mögliche Verzögerung) abhängigen Anteil aufweisen, um sicherzustellen, dass eine hinterherfahrende Transporteinheit TEi+1 gegebenenfalls auch vor einer davor fahrenden Transporteinheit TEi ohne Kollision stehen bleiben kann.

Die Mindestabstände M und/oder Positionsanteile $\Delta l_i$, $\Delta l_i+1$ können vorab für verschiedene Positionen oder Positionsbereiche entlang der Förderstrecke 2, und gegebenenfalls auch für verschiedene Paare von Transporteinheiten TEi, TEi+1 (wegen den Abmessungen und/oder den beförderten Teilen 6) ermittelt und in einem Speicher hinterlegt werden, um im laufenden Betrieb der Fördereinrichtung 1 bedarfsweise ausgelesen zu werden. Alternativ können die einzuhaltenden Mindestabstände M auch laufend während des Betriebs der Fördereinrichtung 1, beispielsweise in jedem Taktschritt der Regelung der Bewegung der Transporteinheiten TEi, TEi+1, ermittelt werden.

Dabei kann in jedem Zeitschritt der Regelung auch geprüft werden, ob durch den aktuellen vorgegebenen Sollwert der Regelung (z.B. eine Sollposition oder eine Sollgeschwindigkeit) der einzuhaltende Mindestabstand M eingehalten wird. Falls der Mindestabstand M nicht eingehalten wird, kann eine bestimmte, konfigurierte Handlung gesetzt werden. Beispielsweise kann die Bewegung einer Transporteinheiten TEi, TEi+1 begrenzt werden, beispielsweise in dem nicht auf die gewünschte Sollgeschwindigkeit oder Sollposition geregelt wird oder eine Transporteinheit TEi, TEi+1 sogar angehalten wird.

## Patentansprüche

1.   Verfahren zum Betreiben einer Fördereinrichtung (1) in Form eines Langstatorlinearmotors mit einer Förderstrecke (2), entlang der zumindest zwei Transporteinheiten (TEi, TEi+1) hintereinander bewegt werden, wobei bei der Bewegung der beiden Transporteinheiten (TEi, TEi+1) geprüft wird, ob ein vorgegebener Mindestabstand (M) zwischen den beiden Transporteinheiten (TEi, TEi+1) eingehalten wird, um eine Kollision der beiden Transporteinheiten (TEi, TEi+1) zu vermeiden, wobei der einzuhaltende Mindestabstand (M) in Abhängigkeit von der Position der beiden Transporteinheiten (TEi, TEi+1) entlang der Förderstrecke (2) verändert wird, **dadurch gekennzeichnet, dass** der einzuhaltende Mindestabstand (M) in Abhängigkeit von den Abmessungen der beiden Transporteinheiten (TEi, TEi+1) verändert wird **und dass** der Mindestabstand (M) aus den Ausdehnungen in Förderrichtung (x) der beiden Transporteinheiten (TEi, TEi+1) ermittelt wird und zu einer Ausdehnung zumindest einer Transporteinheit (TEi, TEi+1) auf einem gekrümmten Förderabschnitt (FAk, FAk+1) ein Positionsanteil ($\Delta l_i$, $\Delta l_i+1$) in Abhängigkeit von der Position und/oder in Abhängigkeit von der Abmessung der Transporteinheit (TEi, TEi+1) hinzugefügt wird.

2.   Verfahren nach Anspruch 1, **dadurch gekennzeichnet, dass** für eine vorausfahrende Transporteinheit (TEi) eine größte, auf einen Referenzpunkt (RPi) der Transporteinheit (TEi) bezogene Ausdehnung der Transporteinheit (TEi) gegen die Förderrichtung (x) und für eine hinterherfahrende Transporteinheit (TEi+1) eine größte, auf einen Referenzpunkt (RPi+1) der Transporteinheit (TEi+1) bezogene Ausdehnung der Transporteinheit (TEi+1) in Förderrichtung (x) ermittelt werden und der Mindestabstand (M) als Summe der beiden Ausdehnungen in und gegen die Förderrichtung (x) und des zu-

mindest einen Positionsanteils (Δli, Δli+1) ermittelt wird.

3. Verfahren nach Anspruch 1 oder 2, **dadurch gekennzeichnet, dass** der Mindestabstand (M) als Summe der jeweils halben Ausdehnung (li/2, li+1/2) der beiden Transporteinheiten (TEi, TEi+1) in Förderrichtung (x) und des zumindest eines Positionsanteils (Δli, Δli+1) ermittelt wird.

4. Verfahren nach einem der Ansprüche 1 bis 3, **dadurch gekennzeichnet, dass** ein Positionsanteil (Δli, Δli+1) in Förderrichtung (x) gesehen vor und hinter der Transporteinheit (TEi, TEi+1) verschieden ist.

5. Verfahren nach Anspruch 1, **dadurch gekennzeichnet, dass** für eine Transporteinheit (TEi, TEi+1) auf einem gekrümmten Förderabschnitt (FAk, FAk+1) mit einer radialen Projektion durch einen Krümmungskreismittelpunkt des Förderabschnittes (FAk, FAk+1) eine auf eine Referenzbahn (RA) projizierte Ausdehnung (e$_i$, e$_{i+1}$) der Transporteinheit (TEi, TEi+1) in Richtung der Förderrichtung (x) ermittelt wird und der Mindestabstand (M) mit dieser projizierten Ausdehnung (e$_i$, e$_{i+1}$) ermittelt wird.

6. Verfahren nach einem der Ansprüche 1 bis 5, **dadurch gekennzeichnet, dass** für eine Durchfahrt von zwei hintereinanderfahrenden Transporteinheiten (TEi, TEi+1) durch eine Weiche (W) mit zwei Förderabschnitten (FAk, FAk+1), wobei jede der beiden Transporteinheiten (TEi, TEi+1) im Bereich der Weiche (W) auf einem anderen Förderabschnitt (FAk, FAk+1) bewegt wird, eine Transporteinheit (TEi) auf dem jeweiligen Förderabschnitt (FAk) auf den jeweils anderen Förderabschnitt (FAk+1) projiziert wird, und die Einhaltung des Mindestabstandes (M) zwischen der projizierten Transporteinheit (TEi') und der anderen Transporteinheit (TEi+1) geprüft wird.

7. Verfahren nach Anspruch 6, **dadurch gekennzeichnet, dass** bei der Ermittlung des Mindestabstandes (M) im Bereich der Weiche (W) die Geometrie der Weiche (W) berücksichtigt wird.

8. Fördereinrichtung in Form eines Langstatorlinearmotors mit einer Förderstrecke (2), entlang der zumindest zwei Transporteinheiten (TEi, TEi+1) hintereinander bewegt werden, und mit einer Kollisionsüberwachungseinheit (7), die bei der Bewegung der beiden Transporteinheiten (TEi, TEi+1) das Einhalten eines vorgegebenen Mindestabstandes (M) prüft, um eine Kollision der beiden Transporteinheiten (TEi, TEi+1) zu vermeiden, wobei der einzuhaltende Mindestabstand (M) in der Kollisionsüberwachungseinheit (7) in Abhängigkeit von der Position der beiden Transporteinheiten (TEi, TEi+1) entlang der Förderstrecke (2) veränderbar ist, **dadurch gekennzeichnet, dass** der einzuhaltende Mindestabstand (M) in der Kollisionsüberwachungseinheit (7) in Abhängigkeit von den Abmessungen der beiden Transporteinheiten (TEi, TEi+1) veränderbar ist **und dass** vorgesehen ist, den Mindestabstand (M) aus den Ausdehnungen in Förderrichtung (x) der beiden Transporteinheiten (TEi, TEi+1) zu ermitteln und zu einer Ausdehnung zumindest einer Transporteinheit (TEi, TEi+1) auf einem gekrümmten Förderabschnitt (FAk, FAk+1) ein Positionsanteil (Δli, Δli+1) in Abhängigkeit von der Position und/oder in Abhängigkeit von der Abmessung der Transporteinheit (TEi, TEi+1) hinzuzufügen.

**Claims**

1. A method for operating a conveyor (1) in the form of a long stator linear motor with a conveyor line (2), along which at least two transport units (TEi, TEi+1) are moved in succession, wherein it is checked during the movement of the two transport units (TEi, TEi+1), whether a predetermined minimum distance (M) between the two transport units (TEi, TEi+1) is maintained in order to avoid a collision of the two transport units (TEi, TEi+1), wherein the minimum distance (M) to be maintained is changed in dependence on the position of the two transport units (TEi, TEi+1) along the conveyor line (2), **characterized in that** the minimum distance (M) to be maintained is changed in dependence on the dimensions of the two transport units (TEi, TEi+1) **and in that** the minimum distance (M) is determined from the extensions of the two transport units (TEi, TEi+1) in the conveying direction (x) and a positional proportion (Δli, Δli+1) is added to an extension of at least one transport unit (TEi, TEi+1) on a curved conveyor section (FAk, FAk+1) depending on the position and/or depending on the dimension of the transport unit (TEi, TEi+1).

2. The method according to claim 1, **characterized in that** for a preceding transport unit (TEi) a largest extension of the transport unit (TEi) related to a reference point (RPi) of the transport unit (TEi) against the conveying direction (x) and for a transport unit (TEi+1) traveling in succession a largest extension of the transport unit (TEi+1) related to a reference point (RPi+1) of the transport unit (TEi+1) in the conveying direction (x) are determined and the minimum distance (M) is determined as the sum of the two dimensions in and against the conveying direction (x) and of the at least one positional proportion (Δli, Δli+1).

3. The method according to claim 1 or 2, **characterized**

**in that** the minimum distance (M) is determined as the sum of the respective half extension (li/2, li+1/2) of the two transport units (TEi, TEi+1) in the conveying direction (x) and of the at least one positional proportion ($\Delta$li, $\Delta$li+1).

4. The method according to any of claims 1 to 3, **characterized in that** a positional proportion ($\Delta$li, $\Delta$li+1) in front and behind the transport unit (TEi, TEi+1), as seen in the conveying direction (x), is different.

5. The method according to claim 1, **characterized in that** for a transport unit (TEi, TEi+1) on a curved conveyor section (FAk, FAk+1), with a radial projection through a center of curvature of the conveyor section (FAk, FAk+1) an extension ($e_i$, $e_{i+1}$) of the transport unit (TEi, TEi+1) in the direction of the conveying direction (x) projected onto a reference path (RA) is determined and the minimum distance (M) is determined with this projected extension ($e_i$, $e_{i+1}$).

6. The method according to any of claims 1 to 5, **characterized in that** for a passage of two transport units (TEi, TEi+1) traveling in succession through a switch (W) with two conveyor sections (FAk, FAk+1), wherein each of the two transport units (TEi, TEi+1) in the area of the switch (W) is moved on another conveyor section (FAk, FAk+1), a transport unit (TEi) on the conveyor section (FAk) is projected on the respective other conveyor section (FAk+1), and wherein the maintenance of the minimum distance (M) between the projected transport unit (TEi') and the other transport unit (TEi+1) is checked.

7. The method according to claim 6, **characterized in that** when determining the minimum distance (M) in the area of the switch (W), the geometry of the switch (W) is taken into account.

8. A conveyor in the form of a long stator linear motor having a conveyor line (2) along which at least two transport units (TEi, TEi+1) are moved in succession, and having a collision monitoring unit (7) which checks during the movement of the two transport units (TEi, TEi+1) the maintenance of a predetermined minimum distance (M) in order to avoid a collision of the two transport units (TEi, TEi+1), wherein the minimum distance (M) to be maintained is modifiable in the collision monitoring unit (7) in dependence on the position of the two transport units (TEi, TEi+1) along the conveyor line (2), **characterized in that** the minimum distance (M) to be maintained is modifiable in the collision monitoring unit (7) as a function of the dimensions of the two transport units (TEi, TEi+1) **and in that** it is provided to determine the minimum distance (M) from the extensions of the two transport units (TEi, TEi+1) in the conveying direction (x) and to add a positional proportion ($\Delta$li,

$\Delta$li+1) to an extension of at least one transport unit (TEi, TEi+1) on a curved conveyor section (FAk, FAk+1) depending on the position and/or depending on the dimension of the transport unit (TEi, TEi+1).

**Revendications**

1. Procédé pour faire fonctionner un convoyeur (1) sous la forme d'un moteur linéaire à stator long comprenant une ligne de convoyage (2), le long de laquelle au moins deux unités de transport (TEi, TEi+1) sont déplacées l'une derrière l'autre, un contrôle étant effectué, lors du déplacement des deux unités de transport (TEi, TEi+1), pour vérifier si une distance minimale (M) prédéfinie est maintenue entre les deux unités de transport (TEi, TEi+1), afin d'éviter une collision des deux unités de transport (TEi, TEi+1), la distance minimale (M) à maintenir étant modifiée en fonction de la position de deux unités de transport (TEi, TEi+1) le long de la ligne de convoyage (2), **caractérisé en ce que** la distance minimale (M) à maintenir est modifiée en fonction des dimensions des deux unités de transport (TEi, TEi+1) **et en ce que** la distance minimale (M) est déterminée à partir des extensions des deux unités de transport (TEi, TEi+1) dans la direction de transport (x) et qu'une part de position ($\Delta$li, $\Delta$li+1) est ajoutée à une extension d'au moins une unité de transport (TEi, TEi+1) sur une section de transport incurvée (FAk, FAk+1) en fonction de la position et/ou en fonction de la dimension de l'unité de transport (TEi, TEi+1).

2. Procédé selon la revendication 1, **caractérisé en ce que,** pour une unité de transport (TEi) qui précède, une extension maximale de l'unité de transport (TEi) relative à un point de référence (RPi) de l'unité de transport (TEi) est déterminée contre la direction de transport (x) et, pour une unité de transport (TEi+1) qui suit, une extension maximale de l'unité de transport (TEi+1) relative à un point de référence (RPi+1) de l'unité de transport (TEi+1) est déterminée dans la direction de transport (x) et la distance minimale (M) et déterminée comme somme des deux extensions dans et contre la direction de transport (x) et de l'au moins une part de position ($\Delta$li, $\Delta$li+1).

3. Procédé selon la revendication 1 ou 2, **caractérisé en ce que** la distance minimale (M) est déterminée comme somme de la demi-extension (li/2, li+1/2) respective des deux unités de transport (TEi, TEi+1) dans la direction de transport (x) et de l'au moins une part de position ($\Delta$li, $\Delta$li+1).

4. Procédé selon l'une quelconque des revendications 1 à 3, **caractérisé en ce qu'**une part de position ($\Delta$li, $\Delta$li+1), vue dans la direction de transport (x), est différente devant ou derrière l'unité de transport (TEi, TEi+1).

5. Procédé selon la revendication 1, **caractérisé en ce que,** pour une unité de transport (TEi, TEi+1) sur une section de transport incurvée (FAk, FAk+1) ayant une projection radiale passant par un centre de cercle de courbure de la section de transport (FAk, FAk+1), une extension ($e_i$, $e_{i+1}$) de l'unité de transport (TEi, TEi+1) projetée sur une trajectoire de référence (RA) est déterminée dans la direction de transport (x) et la distance minimale (M) est déterminée au moyen de cette extension ($e_i$, $e_{i+1}$) projetée.

6. Procédé selon l'une quelconque des revendications 1 à 5, **caractérisé en ce que,** pour un passage de deux unités de transport (TEi, TEi+1) se déplaçant l'une derrière l'autre à travers un aiguillage (W) comprenant deux sections de convoyage (FAk, FAk+1), chacune des unités de transport (TEi, TEi+1) étant déplacée sur une autre section de transport (FAk, FAk+1) dans la zone de l'aiguillage (W), une unité de transport (TEi) sur la section de transport (FAk) respective étant projetée respectivement sur l'autre section de transport (FAk+1) et le maintien de la distance minimale (M) entre l'unité de transport projetée (TEi') et l'autre unité de transport (TEi+1) est contrôlé.

7. Procédé selon la revendication 6, **caractérisé en ce que,** lors de la détermination de la distance minimale (M) dans la zone de l'aiguillage (W), la géométrie de l'aiguillage (W) est prise en compte.

8. Convoyeur sous la forme d'un moteur linéaire à stator long comprenant une ligne de convoyage (2), le long de laquelle au moins deux unités de transport (TEi, TEi+1) sont déplacées l'une derrière l'autre, et comprenant une unité de surveillance de collision (7) qui, lors du déplacement des deux unités de transport (TEi, TEi+1), contrôle le maintien d'une distance minimale (M) prédéfinie, afin d'éviter une collision des deux unités de transport (TEi, TEi+1), la distance minimale (M) à maintenir pouvant être modifiée dans l'unité de surveillance de collision (7) en fonction de la position de deux unités de transport (TEi, TEi+1) le long de la ligne de convoyage (2), **caractérisé en ce que** la distance minimale (M) à maintenir peut être modifiée dans l'unité de surveillance de collision (7) en fonction des dimensions des deux unités de transport (TEi, TEi+1) et **en ce qu'**il est prévu de déterminer la distance minimale (M) à partir des extensions des deux unités de transport (TEi, TEi+1) dans la direction de transport (x) et d'ajouter une part de position ($\Delta l_i$, $\Delta l_{i+1}$) à une extension d'au moins une unité de transport (TEi, TEi+1) sur une section de transport incurvée (FAk, FAk+1) en fonction de la position et/ou en fonction de la dimension de l'unité de transport (TEi, TEi+1).

Fig. 1

**Fig. 2**

**Fig. 4**

Fig. 3

EP 3 599 127 B1

Fig. 5

Fig. 6

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H05303423 A
- EP 3196719 A2
- US 8863669 B2
- EP 3202612 A1